Europäisches Patentamt

**European Patent Office**

**Office européen des brevets**

(19)

(11) Publication number: **0 213 947**

**A2**

(12) # EUROPEAN PATENT APPLICATION

(21) Application number: **86306698.1**

(22) Date of filing: **29.08.86**

(51) Int. Cl.⁴: **C 08 F 289/00**
**C 09 J 7/04**

(30) Priority: **29.08.85 US 770453**

(43) Date of publication of application:
**11.03.87 Bulletin 87/11**

(84) Designated Contracting States:
**AT BE CH DE FR GB IT LI LU NL SE**

(71) Applicant: **RALSTON PURINA COMPANY**
**Checkerboard Square**
**St. Louis Missouri 63164(US)**

(72) Inventor: **Riley, Richard R.**
**3748 Smith Kramer Road**
**Hartville Ohio 44632(US)**

(72) Inventor: **Coco, Charles Edward**
**4460 Laclede Avenue**
**St. Louis MO 63108(US)**

(74) Representative: **Tubby, David George**
**MARKS & CLERK 57-60 Lincoln's Inn Fields**
**London WC2A 3LS(GB)**

(54) **Graft copolymer, process for its production and composition containing it.**

(57) A conjugated diene, such as 1,3-butadiene, and an alkenyl aromatic compound, such as styrene, are graft or over copolymerized on a dissolved or finely divided anionic, fully caustic-treated soy protein in an aqueous alkaline medium, using effective amounts of an oil-soluble azo catalyst, a chelating agent and a transfer agent to form a latex, which can be used in paper coating compositions.

EP 0 213 947 A2

M&C FOLIO: 52899                    WANGDOC: 0631H

## GRAFT COPOLYMER, PROCESS FOR ITS PRODUCTION
## AND COMPOSITION CONTAINING IT

The present invention relates to a graft copolymer and a process for the graft or over copolymerization of a conjugated diene and an alkenyl aromatic monomer on a soy protein.

In accordance with the present invention, we have found that the latex produced by the graft or over copolymerization of a conjugated diene and an alkenyl aromatic monomer on dissolved or finally divided soy protein is useful in paper-coating compositions and is particularly useful as a binder for pigmented paper-coating compositions (particularly those to be printed by gravure or offset printing processes) and is more particularly useful in compositions for lightweight paper to be printed by the gravure process. It may also be used for coating cylinder boards.

The present invention consists in an aqueous alkaline latex containing a graft copolymer of a copolymerizable conjugated diene monomer and a copolymerizable alkenyl aromatic monomer grafted on a dissolved or dispersed soy protein, wherein the amount of units derived from said diene monomer is from 25 to 50 parts by weight, the amount of units derived from said alkenyl aromatic monomer is from 30 to 60 parts by weight and the amount of soy protein is from 10 to 30 parts by weight, said amounts totalling 100 parts by weight.

The invention further consists in a composition comprising said latex and a filler.

The present invention also provides a process for producing a copolymer latex, which comprises the free radical aqueous alkaline graft or over copolymerization of at least one copolymerizable conjugated diene monomer and at least one copolymerizable alkenyl aromatic monomer in the presence of a solution or dispersion of soy protein and in the presence of at least one chelating agent, at least one chain-transfer agent and at least one oil-soluble free radical azo initiator, the amount of said diene monomer being from 25 to 50 parts by weight, the amount of said alkenyl aromatic monomer being from 30 to 60 parts by weight and the amount of said soy protein being from 10 to 30 parts by weight, the sum of the amounts of said diene monomer, said alkenyl aromatic monomer and said soy protein being 100 parts by weight.

It is an advantage of the process of the present invention that the customary emulsifiers and surfactants are not necessary. Also, water-soluble initiators, such as peroxides and persulfates, are not used in the process of the invention. In some paper-coating latices, an acid-containing comonomer is used, but again that is not necessary in the present invention. A further advantage is that no additional co-binder is required in the latex produced by the process of the present invention.

The soy protein employed in the present invention is preferably a soy protein isolate, which can be produced by processes well-known in the art; see, for example "Encyclopedia of Polymer Science and Technology", John Wiley & Sons, Inc., Volume 2 (1965), Volume 8 (1968), Volume 9 (1968), Volume 11 (1969) and Supplement Volume 2 (1977). It is an anionic, fully caustic-treated soy protein. It is dissolved or dispersed (i.e. rendered finally divided, e.g. in a colloidal suspension) in an aqueous alkaline material, for example aqueous ammonium hydroxide, before beginning polymerization. The amount of soy protein is from 10 to 30 parts by weight (dry weight), preferably from 10 to 20 parts by weight, based on the total weight of conjugated diene, alkenyl aromatic monomer and soy protein as 100 parts by weight.

4

The following is a typical procedure which may be employed to produce a soy protein isolate from soybeans.

The starting material is preferably a protein material from which the oil has first been removed. This may be done by crushing or grinding the soybeans and passing them through a conventional oil expeller. However, it is preferable to remove the oil by solvent extraction techniques, using, for example, an aliphatic hydrocarbon such as hexane or an azeotrope of hexane with another material. These solvent-extraction techniques are conventionally employed for the removal of lipids or oil from vegetable protein materials and do not require any detailed description here. Following extraction to remove residual lipids and oil, a vegetable protein material, for example flakes, generally having a high degree of dispersibility is obtained.

The resulting solids can comprise soybean flakes, flour or meal, depending upon the degree of grinding. The proteins and many of the soluble sugars are then extracted from the other constituents of the soybean material (such as cellulosic material) by placing the flakes, meal or flour in an aqueous bath and then extracting with an aqueous medium to provide an aqueous extract having a pH of at least 6.0, preferably at least

5

6.5 and more preferably from 6.5 to 10.0. Where an elevated pH value is desired, particularly a pH value above 6.5, it is normally necessary to employ an alkaline material in the aqueous medium; typical alkaline materials include sodium hydroxide, potassium hydroxide, calcium hydroxide and other commonly accepted food grade alkalis; the particular choice of this material is in no way critical to the present invention. A pH value of about 7 or above is generally preferred, since alkaline extraction facilitates solubilization of the protein, but the exact pH value to be employed is not critical to the present invention and typically the pH of the aqueous extract will be at least 6.0 and preferably from 6.5 to 10. The weight ratio of aqueous extractant to soy protein material is typically from 5:1 to 20:1, more preferably about 10:1, but this, again, is not critical to the present invention.

It is also desirable, but not essential, in practicing this aqueous extraction that an elevated temperature be employed to facilitate solubilization of the protein; however, ambient temperatures are equally satisfactory, if desired. The exact temperature employed is not critical to the present invention and will be chosen having regard to the normal criteria employed in the aqueous extraction of vegetable proteins. As a guide, the actual extraction temperature may suitably range from ambient temperature to 120°F (49°C), the preferred temperature being about 90°F (about 32°C). The time required for extraction is similarly not critical and any period of time may be conveniently employed, the preferred time being about 30 minutes.

After extraction of the protein from the soy protein material, the resulting aqueous protein extract is preferably stored in a holding tank or other suitable container, whilst a second extraction is performed on the insoluble or residual solids from the first extraction step: this second extraction is not, of course, essential, but it does have the advantage that it removes any residual protein which may not have been removed during the first extraction and thus increases the yield of protein and hence the efficiency of the process. If this second extraction is carried out, it will be carried out in a manner similar to that of the first extraction, using an extractant having a pH which is preferably at least 6.0 and more preferably from 6.5 to 10.0. In any second extraction step, we prefer that the weight ratio of extractant to residual material should be from 4:1 to 15:1, more preferably about 6:1. Otherwise, the conditions of the second extraction step are essentially the same as those of the first extraction step. After separating the second aqueous extract, it is preferably combined with the first extract and the whole treated as described hereafter.

The resulting aqueous protein extract (which may or may not be a combination of the first and second extracts) will normally have a pH of at least 6.0, preferably from 6.5 to 10. The protein is then precipitated from this extract by adjusting the pH of the extract to a value at or near the isoelectric point of the protein, thus forming an insoluble precipitate. The exact pH to which the protein extract should be adjusted may vary; however, a typical pH for the isoelectric point of soy protein would be from 4.0 to 5.0 and more commonly from 4.4 to 4.6. The pH of the extract may be adjusted to a value within these ranges by adding a common acidic reagent, such as acetic acid, sulphuric acid, phosphoric acid, hydrochloric acid or any other acidic reagent commonly used in the food industry.

After the protein has been precipitated, a concentration step is preferably carried out in order to concentrate the protein precipitate and remove as large a percentage of the whey as possible. The particular means employed to concentrate the protein precipitate is not critical and a wide variety of conventional processing techniques, including centrifugation, may be employed.  If desired, the concentrated precipitate may
be washed with water, to minimize contamination by the
whey or aqueous liquor.

The copolymerizable conjugated diene monomer which
may be grafted onto the soy protein is preferably a
conjugated diene having from 4 to 6 carbon atoms, such
as 1,3-butadiene, isoprene, 2,3-dimethyl-1,3-butadiene,
piperylene or chloroprene, of which 1,3-butadiene is
preferred.  A single one of these dienes may be used or
a mixture of any two or more of them may be used.

The copolymerizable alkenyl aromatic monomer is more
preferably a vinyl aromatic monomer and is preferably a
compound having from 8 to 12 carbon atoms.  It
constitutes an alkenyl group directly attached to an
aromatic (normally benzene) nucleus. Examples of such
alkenyl aromatic monomers include styrene,
α-methylstyrene, p-t-butylstyrene, p-methylstyrene,
3-ethylstyrene, p-ethylstyrene, methylvinyltoluene and
p-vinyltoluene.  Again, a single one of these alkenyl
aromatic monomers or a mixture of any two or more may be
used.

The reaction is carried out in the presence of a
chelating agent, whose purpose is to chelate, and hence
effectively remove from the reaction mixture, any ion or

9

other material which might interfere with the polymerization, for example ferric or ferrous ions. The amount of chelating agent employed is generally very minor and only sufficient to remove the probably minor amount of such impurities. In general, we prefer to use the chelating agent in an amount of from 0.01 to 1.0, more preferably about 0.05, part by weight per 100 parts by weight of conjugated diene, alkenyl aromatic monomer and soy protein. Examples of chelating agents include ethylenediaminetetraacetic acid and salts thereof, particularly the sodium salts, for example trisodium ethylenediaminetetraacetate dihydrate, tetrasodium ethylenediaminetetraacetate (including technical tetrasodium ethylenediaminetetraacetate), tetrasodium ethylenediaminetetraacetate dihydrate, trisodium ethylenediaminetetraacetate monohydrate, disodium ethylenediaminetetraacetate dihydrate and the acid itself; nitrilotriacetic acid and salts thereof, especially the sodium salts, such as disodium nitrilotriacetate monohydrate; $\underline{N}$-hydroxyethylethylenediaminetriacetic acid and salts thereof, especially the sodium salts, such as trisodium $\underline{N}$-hydroxyethylethylenediaminetriacetate and trisodium $\underline{N}$-hydroxyethylethylenediaminetriacetate dihydrate; disodium ethanoldiglycine (also known as disodium $\underline{N}$-hydroxyethyliminodiacetate); and sodium diethanolglycine (also known as sodium dihydroxyethylglycine). A single such chelating agent or a mixture of any two or more thereof may be used. Of these, we prefer trisodium ethylenediaminetetraacetate and its hydrates, especially the dihydrate.

The polymerization reaction is initiated by means of an oil-soluble azo initiator. Azo initiators for free radical polymerization are well-known, as described in the "Encyclopedia of Polymer Science and Technology", Volume 2 (1965) pages 278-295, John Wiley & Sons, Inc. Of these initiators, we prefer to use the azonitriles, and examples include azobisdimethylvaleronitrile, 2,2'-azobis- isobutyronitrile, 2,2'-azobis-2-methylbutyronitrile and 2,2'-azobis(methylisobutyrate). A single such azo initiator or a mixture of any two or more thereof may be employed. Of the azo initiators, we prefer 2,2'-azobisisobutyronitrile. The amount of initiator necessary to effect copolymerization is very minor and the amount employed is comparable with that commonly employed in known copolymerization processes.

The process of the present invention is also carried out in the presence of a chain-transfer agent and optionally other modifier; the purpose of such agents is to control molecular weight, gelling etc. Although various modifiers and chain-transfer agents have been proposed and may be used, for example benzene, toluene, triphenylmethane or carbon tetrachloride, we generally prefer to use an alkyl mercaptan and/or aralkyl mercaptan having from 8 to 18 carbon atoms, of which the tertiary alkyl mercaptans are preferred. Examples of suitable mercaptans include octyl mercaptan, dodecyl mercaptan, t-octyl mercaptan, t-dodecyl mercaptan, n-tridecyl mercaptan, t-tridecyl mercaptan, tetradecyl mercaptan and hexadecyl mercaptan. A single one of these compounds or a mixture of any two or more thereof may be used. Of these, we prefer t-octyl mercaptan and t-dodecyl mercaptan. The amount of such a chain-transfer agent or other modifier is preferably from 0.15 to 0.9 parts per 100 parts by weight of said conjugated diene, alkenyl aromatic monomer and soy protein.

The temperature employed during the graft or over copolymerization process of the invention may vary widely within the ranges well-known for polymerization processes of this type. In general, the temperature employed should be sufficient to effect polymerization by activation of the catalyst and of the double bonds of the monomers. However, the temperature employed should neither be so high as to cause a runaway reaction nor so low as to retard polymerization. In general, we prefer to effect the polymerization at a temperature within the range from 40 to 80°C. The time required for the polymerization may vary widely, depending partly upon the reaction temperature and partly upon the desired degree of polymerization. In general, we prefer to carry out polymerization to about 100% conversion. A period of from 8 to 14 hours will normally suffice.

The graft or over copolymerization of the invention should be conducted in an alkaline aqueous medium. In general, we prefer that the pH of the polymerization medium should be within the range from 8.5 to 10, more preferably from 9 to 9.5. The appropriate pH may, if required, be achieved by the addition of a suitable alkale to the medium. The nature of such alkali is not critical to the invention and any alkali well-known for use in processes of this type may be employed, provided that it does not interfere with the polymerization reaction. An alkali metal or ammonium hydroxide is preferred, more preferably ammonium hydroxide.

The water used in the aqueous medium for the polymerization should be free from deleterious materials and preferably should be distilled and/or ion-exchanged. Sufficient water is used to enable maintenance of the emulsion or latex and to permit proper mixing or stirring of the ingredients during polymerization to achieve the desired rate and degree of polymerization, heat transfer etc. The solids content of the reaction medium is preferably at least 30% by weight.

The copolymerization is preferably conducted in a closed reactor, such as a pressure reactor, fitted with a stirrer or other agitating means, as well as with means for evacuating the reactor, heating and cooling the contents and flushing or pumping in an inert gas, such as nitrogen, helium, argon or neon. In addition, the reactor is normally provided with means for charging monomers, water, initiators and other reaction components, with means for venting the reactor and with means for recovering the polymer. The reactor is preferably cleaned or flushed out between polymerization runs to remove traces of initiators, modifiers, residues etc which might interfere with subsequent polymerization. There is preferably sufficient agitation or stirring of the polymerization medium to ensure thorough mixing, diffusion and contact of reagents.

Free radical aqueous copolymerization of ethylenically unsaturated monomers is well-known in the art and full details of the conditions necessary are given by Whitby et al, "Synthetic Rubber", John Wiley & Sons, Inc., New York (1954), Bovey et al, "Emulsion Polymerization" in "High Polymers" Volume IX, Interscience Publishers, Inc., (1955), Schildknecht,

"Vinyl and Related Polymers", John Wiley & Sons, Inc., New York (1952) and "Encyclopedia of Polymer Science and Technology", Volume 3 (1965), Volume 5 (1966), Volume 7 (1967), Volume 9 (1968) and Volume 11 (1969), Interscience Publishers, Inc.

The polymerization process of the present invention may be considered as a graft copolymerization, over copolymerization, core/shell copolymerization or interpolymerization. The technique of polymerizing or copolymerizing one or more monomers in the presence of a polymer or other substrate is known and is frequently called "graft polymerization" or "graft copolymerization" ["Proceedings of the Third Rubber Technology Congress", W. Heffer & Sons, Limited, Cambridge, pages 185-195 (1954); Ham "Copolymerization" in "High Polymers", Volume XVIII, Interscience Publishers Inc., (1964); Burlant and Hoffman "Block Graft Polymers", Reinhold Publishing Corporation, New York (1960); Ceresa "Block and Graft Copolymers" Butterworth & Co. (Publishers) Limited, London (1962); Ceresa "Block and Graft Copolymerization" Volume 1 (1973) and Volume 2 (1976), John Wiley & Sons Limited, New York; and Battaerd and Tregear "Graft Copolymers" in "Polymer Reviews", Volume 16, Interscience Publishers, Inc. (1967)]. Such copolymers may consist wholly of the graft copolymer but may also be a mixture of homopolymers and/or copolymers as well as the graft copolymer itself; this will depend upon many factors, including the rate of polymerization of the monomers and the polymerization conditions.

The graft copolymer latices of the present invention can be treated during or after polymerization with various conventional additives, such as antioxidants, biocides, defoamers and additional alkaline material (such as ammonium hydroxide).

All of the graft copolymerization ingredients may be charged into the reactor at once and the graft copolymerization carried out to completion, or a seed latex may be formd by first graft copolymerizing part of the conjugated diene and alkenyl aromatic monomer on the soy protein in the presence of some of the polymerization materials, followed by further additions of the conjugated diene and vinyl aromatic monomer along with remaining polymerization materials.

If desired, the latices of the present invention can be mixed with finely divided fillers, in particular paper-coating fillers, which may be any such material, normally inorganic, commonly used in paper-coating compositions; examples include clays, kaolin, calcium carbonate, titanium dioxide, and zinc oxide. If desired, thickening agents, viscosity stabilizers, additional alkaline material (e.g. ammonium hydroxide) and other conventional additives can, if required, be added to these compositions. In general, a paper-coating composition in accordance with the present invention will have a solids content of from 20 to 70% by weight. The solids preferably comprise from 2 to 20% by weight, on a dry weight basis, of the graft copolymer and from 98 to 80% by weight of the paper-coating fillers. The paper-coating composition may be spread on paper and hot calendared to cure or set the graft copolymer and form an adherent and dried coating on the paper, as is well-known in the art.

The invention is further illustrated by the following Examples, in which parts and percentages are by weight.

## EXAMPLE 1

A clean reactor was flushed with nitrogen, and was then charged with 215 parts of deionized water, 0.05 part of trisodium ethylenediaminetetraacetate dihydrate (Sequestrene Na$_3$ - trade mark), 18.50 parts of soy protein, 0.10 part of a silicate defoamer (Drew L-198, trade mark) and sufficient aqueous ammonium hydroxide to provide a pH in the range from 9 to 9.5 and to solubilize the soy protein. The temperature of the mixture was increased to 150°F (65.6°C) and the reactor was evacuated minimally, to avoid losing ammonium hydroxide. There was then added to the reactor 13.3 parts of styrene containing 0.60 part of 2,2'-azobisisobutyronitrile (Vazo 64, trade mark), followed by 0.15 part of t-dodecyl mercaptan (Sulfole 120, trade mark, average molecular weight 198, calculated purity 96.8% and mercaptan sulfur 15.4%) and 13.8 parts of 1,3-butadiene. Polymerization was conducted to a total solids content of from 14 to 16% by weight. Additional increments of styrene, t-dodecyl mercaptan and 1,3-butadiene were added to the reactor to obtain a final theoretical solids content of the latex of about 32.2%.

0.5 parts of the silicate defoamer was added to the latex, the reactor was cooled, and then the latex was stripped of residual monomers. Finally, 0.80 part of a chemical biocide (Proxel GSL, trade mark) was added as an aqueous solution containing 25% solids, and sufficient aqueous ammonium hydroxide was added to cause the pH to revert to 9.0 to 9.5. During the graft copolymerization, the total amounts of 1,3-butadiene, t-dodecyl mercaptan and styrene added were 41.25 parts, 0.45 part and 39.88 parts, respectively. This was run A. The polymerization reaction time to completion was

10 hours.

Additional similar runs B and C were carried out and in each case the polymerization reaction time to completion was 11 hours.

The properties of the butadiene/styrene soy protein graft copolymer latices produced are shown in Tables 1 and 2, which show the properties before and after stripping, respectively.

In this Example and subsequent Examples, the soy protein employed was a anionic, fully caustic-treated soy protein in powder form. It had an average molecular weight of about $84.9 \times 10^3$ Daltons and a surface tension of 40.3 dyne/cm at a pH of 7.0. In excess of 95% of the protein was soluble at pH values above 9.0.

Table 1

| Run | TSC (%) | pH | S.T. (d/cm) | B.V. (cps) | R.M. (%) |
|-----|---------|-----|-------------|------------|----------|
| A | 32.3 | 9.4 | 52.2 | 862 | 0.84 |
| B | 30.9 | 9.5 | 54.5 | 894 | 0.46 |
| C | 31.2 | 9.1 | 49.5 | 714 | 0.38 |

TABLE 2

| Run | TSC (%) | pH | S.T. (d/cm) | B.V. (cps) | R.M. (%) | Prefloc (%) |
|-----|---------|-----|-------------|------------|----------|-------------|
| A | 32.3 | 9.1 | 43.2 | 504 | 0.35 | 0.06 |
| B | 31.2 | 9.8 | 54.9 | 550 | 0.42 | 0.02 |
| C | 31.7 | 9.7 | 54.0 | 590 | 0.31 | 0.04 |

TSC = total solids content, % by weight.

S.T. = surface tension (dyne/cm).

B.V. = Brookfield viscosity (centipoises).

R.M. = residual monomers, % by weight.

EXAMPLE 2

Additional runs were carried out in accordance with the procedure described in Example 1, but with the variations shown in Table 3. The results are shown in Table 4.

Table 3

| Run | Polymerization Time (hours) | | Notes |
|---|---|---|---|
| | to 80% TSC | to completion | |
| D | 5.5 | 10 | Control |
| E | 9.0 | 15 | Polymerized at a slower rate |
| F | 6.0 | 10 | |
| G | 3.7 | | Smaller particle size and higher viscosity. Reaction rate faster |

Table 3 (cont)

| Run | Parts by weight | | |
|---|---|---|---|
| | Soy | 1,3-butadiene | styrene |
| D | 18 | 41.5 | 40.0 |
| E | 18 | 41.5 | 40.0 |
| F | 18 | 41.5 | 40.0 |
| G | 30 | 35.5 | 34.0 |

Table 4

| Run | TSC (%) | pH | S.T. (d/cm) | B.V. (cps) | % Light Transmission |
|-----|---------|-----|-------------|------------|----------------------|
| D | 31.4 | 9.1 | 53.5 | 305 | 56 |
| E | 29.0 | 9.2 | 52.5 | 270 | 58 |
| F | 30.5 | 9.1 | 56.4 | 232 | 60 |
| G | 30.0 | 8.9 | 54.4 | 3050 | 72 |

EXAMPLE 3

Graft copolymers were prepared in bottles according to the general process of Example 1, except that the amounts of styrene, 1,3-butadiene and soy protein were varied. After the graft copolymerization was complete, films from portions of the latices were cast, cured (dried) at 275°F (135°C) and given physical tests. The properties of the latices were determined. The results are shown in Table 5.

22

## Table 5

| Run No. | Parts by weight | | | Ultimate Elongation (%) | Ultimate Tensile Strength (psi) |
|---|---|---|---|---|---|
| | Soy | St. | Bd. | | |
| 1 | 12.5 | 40 | 47.5 | 162 | 488 |
| 2 | 12.5 | 45 | 42.5 | 347 | 648 |
| 3 | 12.5 | 50 | 37.5 | 298 | 692 |
| 4 | 12.5 | 60 | 27.5 | 270 | 1758 |
| 5 | 18.5 | 35 | 46.5 | 60 | 1039 |
| 6 | 18.5 | 40 | 41.5 | 683 | 1079 |
| 7 | 18.5 | 45 | 36.5 | 138 | 949 |
| 8 | 18.5 | 50 | 31.5 | 157 | 1270 |
| 9 | 6.5 | 40 | 53.5 | - | - |
| 10 | 6.5 | 50 | 43.5 | - | - |
| 11 | 6.5 | 60 | 33.5 | 443 | 342 |

St = styrene; Bd = 1,3-butadiene

A further film was prepared from a portion of each latex, cast, cured (dried) at 325°F (163°C) and the properties are shown in Table 6. The properties of the graft copolymer are shown in Table 7.

23

Table 6

| Run No. | Ultimate Elongation (%) | Ultimate Tensile Strength (psi) |
|---|---|---|
| 1 | 203 | 578 |
| 2 | 363 | 703 |
| 3 | 303 | 849 |
| 4 | 223 | 2087 |
| 5 | 51 | 1028 |
| 6 | 107 | 1050 |
| 7 | 150 | 1157 |
| 8 | 193 | 1173 |
| 9 | – | – |
| 10 | – | – |
| 11 | 455 | 400 |

24

Table 7

| Run No. | TSC (%) | pH | B.V. (cps) | S.T. (d/cm) | % Light Transmission |
|---------|---------|-----|------------|-------------|----------------------|
| 1 | 35.6 | 8.4 | 290 | 65.1 | 39 |
| 2 | 34.9 | 8.4 | 280 | .63.2 | 40 |
| 3 | 36.5 | 8.3 | 290 | 65.1 | 42 |
| 4 | 35.6 | 8.3 | 280 | 63.2 | 38 |
| 5 | 39.0 | 8.4 | 290 | 65.1 | 40 |
| 6 | 39.1 | 8.4 | 300 | 65.1 | 39 |
| 7 | 40.7 | 8.4 | 290 | 67.1 | 41 |
| 8 | 43.0 | 8.4 | 320 | 63.2 | 39 |
| 9 | - | - | - | - | - |
| 10 | - | - | - | - | - |
| 11 | 34.2 | 8.4 | 300 | 65.1 | 42 |

## EXAMPLE 4

Paper coating tests were undertaken with compositions using the graft copolymer latex of Example 1, Run No. A. Two formulations were made:

Formulation I:

    6 pbw of dry graft copolymer (as latex), 70 pbw kaolin clay, 0.8 micron particle size, 30 pbw delaminated kaolin clay, water added to adjust to a solids content of

    57.8% and $NH_4OH$ added to adjust to a pH of 9.

Formulation II:

    6 pbw dry graft copolymer (as latex), 70 pbw kaolin clay, 0.8 micron particle size, 30 pbw delaminated kaolin clay, water added to adjust to a solids content of

    55%,

    $NH_4OH$ added to adjust to a pH of 9 and 0.2 pbw of thickener (Rohm and Haas Co. TT 935 acrylate type thickener).

Two types of paper coating heads were used:

    SD - less than 3 inches of exposure between applied coating and trailing blade (short dwell) and

    LD - from 10 to 20 inches of exposure between application roller and trailing blade (long dwell).

The raw paper stock used was a lightweight (very thin) web offset gravure paper (about 29 lbs/ream) containing some ground wood. Sufficient coating was applied to hide any colour in the raw paper stock and fill up any pores in the paper.

The results on testing are shown in Table 8, below:

## Table 8

| Run Number | 20 | 21 | 22 | 23 | 24 | 25 | 26 | 27 |
|---|---|---|---|---|---|---|---|---|
| Coating Head | SD | SD | SD | SD | LD | LD | LD | LD |
| Formulation | I | I | I | I | II | II | II | II |
| Coat Weight, Pounds/3300 ft$^2$ (two weeks after coating) Not calendered | 7.0 | 6.8 | 4.6 | 3.9 | 2.7 | 4.0 | 5.0 | 5.5 |
| Coat Weight, Pounds/3300 ft$^2$ (at time of coating) Not calendered | 8.5 | 6.4 | 6.1 | 5.2 | 3.2 | 4.9 | 6.1 | 7.4 |
| Supercalendering, Nips[1] | 2 | 2 | 4 | 6 | 8 | 6 | 4 | 2 |
| Gloss, 1 hour (after calendering)[2] | 68.3 | 66.2 | 60.4 | 58.4 | 46.6 | 59.2 | 60.1 | 63.0 |
| Gloss, 36 hours (after calendering)[2] | 64.3 | 61.5 | 54.0 | 49.9 | 44.8 | 52.5 | 58.1 | 56.9 |

27

## Table 8

| | | | | | | | | |
|---|---|---|---|---|---|---|---|---|
| Heliotest, 35 kg.[3] | 101 | 103 | 89 | 107 | 22 | 75 | 70 | 92 |
| Heliotest, 20 Kg.[3] | 41 | 31 | 21 | 18 | 4 | 17 | 41 | 32 |

(1)  Samples were supercalendered at 750 pli (pounds/linear inch) and 130°F (54.4°C).

(2)  75 degree reflectance reading.  Acceptance level is an average figure of about 60 after aging.

(3)  Pressure applied to laboratory printing tester ink printed from etched printing roll as in commercial gravure printing process.  Highest number is best.

28

CLAIMS

1. An aqueous alkaline latex containing a graft or over copolymer of at least one copolymerizable conjugated diene and at least one copolymerizable alkenyl aromatic monomer on a solubilized or dispersed soy protein, units derived from said diene monomer being present in an amount of from 25 to 50 parts by weight, units derived from said alkenyl aromatic monomer being present in an amount of from 30 to 60 parts by weight and said soy protein being present in an amount of from 10 to 30 parts by weight, the total of said units derived from diene monomer and from alkenyl monomer and said soy protein being 100 parts by weight.

2. A latex according to claim 1, in which said conjugated diene monomer is 1,3-butadiene.

3. A latex according to claim 1 or claim 2, in which said alkenyl aromatic monomer is styrene.

4. A composition comprising a latex according to any one of claims 1 to 3 and a filler.

5. A composition according to claim 4, having a solids content of from 20 to 70% by weight.

6. A composition according to claim 5, in which the solids content of said composition comprises from 2 to 20% by weight of said graft or over copolymer and from 98 to 80% by weight of said filler.

7. A composition according to any one of claims 4 to 6, in which said filler is a paper-coating filler.

8. Paper having an adherent, cured and dried coating formed from a composition according to any one of claims 4 to 7.

9. A process for preparing a copolymer, which comprises the free radical aqueous alkaline graft or over copolymerization of at least one copolymerizable conjugated diene monomer and at least one copolymerizable alkenyl aromatic monomer in the presence of a solution of dispersion of soy protein and in the presence of at least one chelating agent, at least one chain-transfer agent, and at least one oil-soluble free radical azo initiator, to form a latex, said diene monomer being employed in an amount of from 25 to 50 parts by weight, said alkenyl aromatic monomer being employed in an amount of from 30 to 60 parts by weight and said soy protein being employed in an amount of from 10 to 30 parts by weight, the sum of said diene monomer, said alkenyl aromatic monomer and said soy protein being 100 parts by weight.

10. A process according to claim 9, in which said diene monomer is 1,3-butadiene.

11. A process according to claim 9 or claim 10, in which said alkenyl aromatic monomer is styrene.

12. A process according to any one of claims 9 to 11, in which said chain-transfer agent is at least one alkyl and/or aralkyl mercaptan having from 8 to 18 carbon atoms.

13. A process according to claim 12, in which said mercaptan is t-dodecyl mercaptan.

14. A process according to any one of claims 9 to 13, in which said chelating agent is ethylenediaminetetraacetic acid or a salt thereof.

15. A process according to claim 14, in which said chelating agent is trisodium ethylenediaminetetraacetate.

16. A process according to claim 15, in which said chelating agent is trisodium ethylenediaminetetraacetate dihydrate.